# EUROPEAN PATENT APPLICATION

(11) **EP 2 335 806 A1**
(43) Date of publication of application: **22.06.2011**
(21) Application number: 09178060.1
(22) Date of filing: 04.12.2009
(51) Int. Cl.: B01D 53/26, B01D 53/50, B01D 5/00

(54) **Method and system for condensing water vapour from a carbon dioxide rich flue gas**

(71) Applicant: Alstom Technology Ltd, 5400 Baden (CH)
(72) Inventor: Åhman, Stefan, 352 42 Växjö (SE); Grubbström, Jörgen, 352 55 Växjö (SE); Wang, Wuyin, 352 49 Växjö (SE)
(74) Representative: Simonsson, Erik

(57) **Abstract**

A gas cleaning system is operative for removing water vapour from a carbon dioxide rich flue gas generated in a boiler combusting a fuel in the presence of a gas containing oxygen gas. The gas cleaning system comprises a flue gas condenser (12) being operative for condensing water from at least a portion of the carbon dioxide rich flue gas generated in the boiler by bringing the carbon dioxide rich flue gas into contact with a circulating cooling liquid, thereby generating a cleaned carbon dioxide rich flue gas having a lower concentration of water vapour than the carbon dioxide rich flue gas leaving the boiler. The gas cleaning system comprises a heat pump (100) being operative for absorbing heat at a first temperature from the cooling liquid, and for desorbing heat at a second temperature, being higher than the first temperature, to a heat sink (124).

## Description

### Field of the Invention

The present invention relates to a method of removing water vapour from a carbon dioxide rich flue gas generated in a boiler combusting a fuel in the presence of a gas containing oxygen gas.

The present invention also relates to a gas cleaning system being operative for removing water vapour from a carbon dioxide rich flue gas generated in a boiler combusting a fuel in the presence of a gas containing oxygen gas.

### Background of the Invention

In the combustion of a fuel, such as coal, oil, peat, waste, etc., in a combustion plant, such as a power plant, a hot process gas is generated, such process gas containing, among other components, carbon dioxide CO₂. With increasing environmental demands various processes for removing carbon dioxide from the process gas have been developed. One such process is the so called oxy-fuel process. In an oxy-fuel process a fuel, such as one of the fuels mentioned above, is combusted in the presence of a nitrogen-lean gas. Oxygen gas, which is provided by an oxygen source, is supplied to a boiler in which the oxygen gas oxidizes the fuel. In the oxy-fuel combustion process a carbon dioxide rich flue gas is produced, the carbon dioxide content of which can be compressed in a separate unit and be disposed of in order to reduce the emission of carbon dioxide into the atmosphere.

An example of an oxy-fuel boiler is described in US 2007/0243119. The oxy-fuel boiler of US 2007/0243119 generates a process gas which is referred to as a flue gas. The flue gas is treated in a wet scrubber in which a cool liquid reagent is circulated. The cool liquid reagent causes a cooling of the flue gas to condense a portion of the water content of the flue gas.

### Summary of the Invention

An object of the present invention is to provide a method of condensing water vapour from a carbon dioxide rich flue gas generated in a boiler combusting a fuel in the presence of a gas containing oxygen gas, the method being more efficient with respect to water vapor condensation efficiency and/or operating costs compared to the prior art method.

This object is achieved by a method of removing water vapour from a carbon dioxide rich flue gas generated in a boiler combusting a fuel in the presence of a gas containing oxygen gas, the method comprising
forwarding at least a portion of the carbon dioxide rich flue gas generated in the boiler to a flue gas condenser;
cooling, in said flue gas condenser, the carbon dioxide rich flue gas by bringing the carbon dioxide rich flue gas into contact with a circulating cooling liquid to condense water from the carbon dioxide rich flue gas, thereby generating a cleaned carbon dioxide rich flue gas having a lower concentration of water vapour than the carbon dioxide rich flue gas leaving the boiler, and
utilizing a heat pump for absorbing heat at a first temperature from the cooling liquid, and for desorbing heat at a second temperature, being higher than the first temperature, to a heat sink.

An advantage of this method is that it becomes much easier to control the operation of the flue gas condenser, such that a suitably low concentration of water vapour in the cleaned carbon dioxide rich flue gas can be achieved at varying conditions, both with respect to varying conditions of the carbon dioxide rich flue gas entering the flue gas condenser, and with respect to varying conditions of the heat sink. Furthermore, it becomes easier to obtain a low cooling temperature in the flue gas condenser.

According to one embodiment a parameter which is related to the water vapour concentration of the cleaned carbon dioxide rich flue gas leaving the flue gas condenser is measured, and is compared to a set point for that parameter. By measuring said parameter it is possible to determine whether or not a suitably low concentration of water vapour in the cleaned carbon dioxide rich flue gas has been achieved.

According to one embodiment the operation of the heat pump is controlled based on a comparison between a measured value of the parameter which is related to the water vapour concentration of the cleaned carbon dioxide rich flue gas leaving the flue gas condenser and the set point for that parameter. An advantage of this embodiment is that the operation of the heat pump can be controlled so as to compensate for variations in the operation of the boiler, the flue gas condenser, the heat sink, or any other device that influences the condensation of water vapour in the flue gas condenser.

According to one embodiment the carbon dioxide rich flue gas is brought into direct contact with the cooling liquid in the flue gas condenser. An advantage of this embodiment, which may be embodied in the form of, for example, a packed tower or a spray tower, is that the cooling liquid efficiently cools the carbon dioxide rich flue gas, and that the cooling liquid may also, simultaneously with cooling the gas, remove some pollutants, such as sulphur dioxide, from the carbon dioxide rich flue gas.

According to one embodiment the carbon dioxide rich flue gas is indirectly cooled in the flue gas condenser by means of a cooling liquid. By indirect cooling, which may be performed in a tube-cooler type of condenser, the cooling liquid is not contaminated by any components of the carbon dioxide rich flue gas. This makes it possible to utilize various types of cooling liquids, including various hydrocarbon containing cooling liquids, that are very suitable for cooling the carbon dioxide rich flue gas in the condenser, but which should not be mixed with the carbon dioxide rich flue gas.

According to one embodiment the cooling liquid cooling the carbon dioxide rich flue gas indirectly in the flue gas condenser is also utilized as a cooling media of said heat pump. An advantage of this embodiment is that less equipment is needed, since the flue gas condenser functions both for cooling the carbon dioxide rich flue gas, and as evaporator evaporating the cooling media of the heat pump, the cooling media of the heat pump and the cooling liquid of the condenser being one and the same substance in this embodiment. A further advantage is that the energy efficiency becomes attractive, since there is no need for an intermediate heat transfer loop between the flue gas condenser and the heat pump.

According to one embodiment the cooling liquid is supplied to the flue gas condenser at a temperature of 0-35°C, preferably at a temperature of 0-20°C. An advantage of this embodiment is that the water vapour concentration of the cleaned carbon dioxide rich flue gas becomes very low, which means that the gas leaving the flue gas condenser and being forwarded for disposal contains almost only carbon dioxide.

A further object of the present invention is to provide a gas cleaning system being operative for removing water vapour from a carbon dioxide rich flue gas, the gas cleaning system being more efficient than the prior art gas cleaning systems.

This object is achieved by means of a gas cleaning system being operative for removing water vapour from a carbon dioxide rich flue gas generated in a boiler combusting a fuel in the presence of a gas containing oxygen gas, the gas cleaning system comprising a flue gas condenser being operative for condensing water from at least a portion of the carbon dioxide rich flue gas generated in the boiler by bringing the carbon dioxide rich flue gas into contact with a circulating cooling liquid, thereby generating a cleaned carbon dioxide rich flue gas having a lower concentration of water vapour than the carbon dioxide rich flue gas leaving the boiler, the gas cleaning system further comprising a heat pump being operative for absorbing heat at a first temperature from the cooling liquid, and for desorbing heat at a second temperature, being higher than the first temperature, to a heat sink.

An advantage of this gas cleaning system is that it is very efficient in removing water vapour from carbon dioxide rich flue gases.

According to one embodiment the gas cleaning system further comprises a sensor which is operative for measuring a parameter which is related to the water vapour concentration of the cleaned carbon dioxide rich flue gas leaving the flue gas condenser, and a control device which is operative for controlling, in view of a comparison of a measured value of said parameter and a set point of said parameter, the operation of the heat pump. An advantage of this embodiment is that the flue gas condenser can be controlled to always work efficiently, such that the cleaned carbon dioxide rich flue gas leaving the flue gas condenser always has a constant and low concentration of water vapour.

According to one embodiment said heat sink comprises a cooling tower. An advantage of a cooling tower is that a lot of heat can be dissipated to the ambient air. Thanks to the heat pump, a large driving force, being the temperature difference between the heat transfer media being cooled in the cooling tower and the temperature of the ambient air, can be achieved also in warm summer days.

According to one embodiment said heat sink comprises the boiler. An advantage of this embodiment is that the boiler has a constant need for heating of boiler water, regardless of any ambient conditions. Thanks to the heat pump, the heat absorbed in the flue gas condenser can be delivered to the boiler water at a high temperature, making the heat valuable in the heating of the boiler water. As alternative to heating boiler water, or in combination therewith, the heat absorbed in the flue gas condenser may also be utilized for heating combustion air and/or combustion oxygen gas.

According to one embodiment said heat pump comprises at least two heat pump stages arranged in series. An advantage of this embodiment is that heat can be delivered to the heat sink at a very high temperature level, such as more than 120°C. A further advantage is that the cooling liquid cooling the carbon dioxide rich flue gas in the flue gas condenser can be cooled to very low temperatures, such as temperatures of less than 5°C.

According to one embodiment said heat pump is a type of heat pump which is selected from the group of heat pumps comprising ammonia-water absorption heat pumps and carbon dioxide heat pumps. An advantage of these heat pumps it that they are efficient for large scale cooling of the cooling liquid of the flue gas condenser to low temperatures, and for desorbing heat to the heat sink at a high temperature.

According to one embodiment the flue gas condenser is an indirect cooling condenser, the flue gas condenser being operative for functioning as a heat pump evaporator in which a cooling media being circulated in the heat pump is made to evaporate.

Further objects and features of the present invention will be apparent from the description and the claims.

### Brief description of the Drawings

The invention will now be described in more detail with reference to the appended drawings in which:
Fig. 1 is a schematic side view of a boiler system in accordance with one embodiment.
Fig. 2 is a schematic side view of a flue gas condenser.
Fig. 3 is a schematic side view, and illustrates a heat pump integrated with the flue gas condenser of Fig. 2
Fig. 4 is a schematic side view, and illustrates a two-stage heat pump integrated with a flue gas condenser in accordance with an alternative embodiment.

### Description of Preferred Embodiments

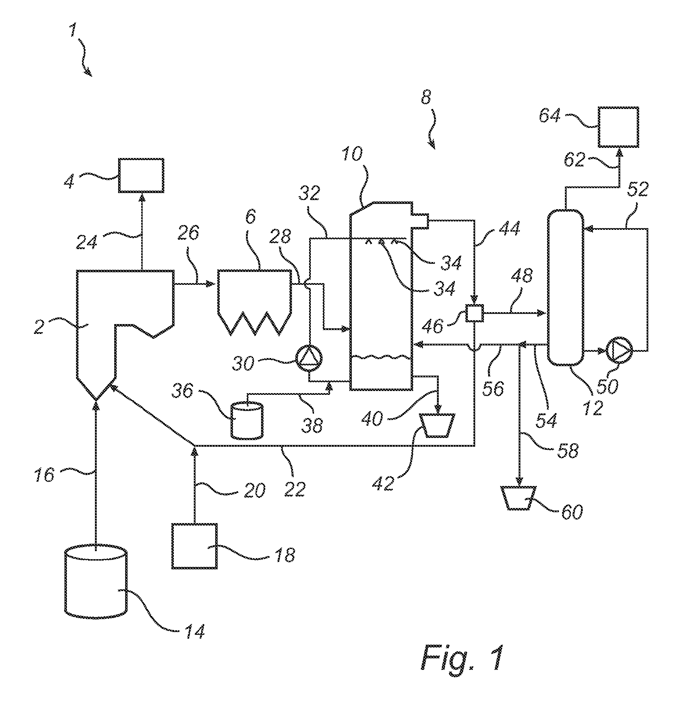

Fig. 1 is a schematic representation of a boiler system 1, as seen from the side thereof. The boiler system 1 comprises, as main components, a boiler 2, being in this embodiment an oxy-fuel boiler, a steam turbine electric power generation system, schematically indicated as 4, a particulate removal device in the form of an electrostatic precipitator 6, and a gas cleaning system 8. The gas cleaning system 8 comprises, as its main components, a first gas cleaning device in the form of a wet scrubber 10, and a second gas cleaning device in the form of a flue gas condenser 12.

A fuel, such as coal, oil, or peat, is contained in a fuel storage 14, and can be supplied to the boiler 2 via a supply pipe 16. An oxygen gas source 18 is operative for providing oxygen gas in a manner which is known per se. The oxygen gas source 18 may be an air separation plant operative for separating oxygen gas from air, an oxygen separating membrane, a storage tank, or any other source for providing oxygen gas to the system 1. A supply duct 20 is operative for forwarding the produced oxygen gas, comprising typically 90-99.9 vol.% oxygen, O₂, to the boiler 2. A duct 22 is operative for forwarding recirculated flue gas, which contains carbon dioxide, to the boiler 2. As indicated in Fig. 1 the supply duct 20 joins the duct 22 upstream of the boiler 2, such that oxygen gas and recirculated flue gas, which contains carbon dioxide, may become mixed with each other to form a gas mixture containing typically about 20-50 % by volume of oxygen gas, the balance being mainly carbon dioxide and water vapour, upstream of the boiler 2. Since almost no air enters the boiler 2 there is almost no nitrogen gas supplied to the boiler 2. In practical operation, less than 3 vol.% of the gas volume supplied to the boiler 2 is air, which mainly enters the boiler 2 as a leakage of air. The boiler 2 is operative for combusting the fuel, that is to be supplied via the supply pipe 16, in the presence of the oxygen gas, mixed with the recirculated flue gas, which contains carbon dioxide, that is to be supplied via the duct 22. A steam pipe 24 is operative for forwarding steam, that will be produced in the boiler 2 as a result of the combustion, to the steam turbine electric power generation system 4, which is operative for generating power in the form of electric power.

A duct 26 is operative for forwarding carbon dioxide rich flue gas generated in the boiler 2 to the electrostatic precipitator 6. By "carbon dioxide rich flue gas" is meant that the flue gas leaving the boiler 2 via the duct 26 will contain at least 40 % by volume of carbon dioxide, CO₂. Often more than 50% by volume of the flue gas leaving the boiler 2 will be carbon dioxide. The balance of the "carbon dioxide rich flue gas" will be about 20-50% by volume of water vapour (H₂O), 2-7 % by volume of oxygen (O₂), since a slight oxygen excess is often preferred in the boiler 2, and totally about 0-10 % by volume of other gases, including mainly nitrogen (N₂) and argon (Ar), since some leakage of air can seldom be completely avoided.

The electrostatic precipitator 6, which may be of a type which is per se known from, for example, US 4,502,872, removes most of the dust particles from the carbon dioxide rich flue gas. As alternative to an electrostatic precipitator a fabric filter, which is per se known from, for example, US 4,336,035, may be utilized for removing the dust particles. A duct 28 is operative for forwarding the carbon dioxide rich flue gas from the electrostatic precipitator 6 to the wet scrubber 10 of the gas cleaning system 8.

The wet scrubber 10 is of the tower scrubber type, a scrubber type which is per se known from, for example, EP 0 162 536. The wet scrubber 10, which is operative for removing at least a portion, and preferably at least 80%, of the sulphur dioxide content of the carbon dioxide rich flue gas coming from the boiler 2 via the electrostatic precipitator 6, comprises a circulation pump 30 which is operative for circulating, in a slurry circulation pipe 32, a lime stone slurry from the bottom of the wet scrubber 10 to a set of slurry nozzles 34 arranged in the upper portion of the wet scrubber 10. The slurry nozzles 34 are operative for finely distributing the lime stone slurry in the wet scrubber 10 and to achieve good contact between the lime stone slurry and the flue gas being forwarded to the wet scrubber 10 via the duct 28 and flowing substantially vertically upwards inside the wet scrubber 10. Fresh lime stone, CaCO₃, is supplied to the circulation pipe 32 from an absorbent supply device comprising a lime stone storage 36 and a supply pipe 38. In the wet scrubber 10, sulphur dioxide, SO₂, reacts with the lime stone, CaCO₃, to form calcium sulphite, CaSO₃, which is subsequently oxidized to form gypsum, CaSO₄. The oxidation of calcium sulphite is preferably performed by bubbling air or oxygen gas through the lime stone slurry in an external vessel, not shown in Fig. 1, to avoid mixing the oxidation air or oxygen gas with the carbon dioxide rich flue gas. The gypsum formed is removed from the wet scrubber 10 via a disposal pipe 40 and is forwarded to a gypsum dewatering unit, schematically indicated as 42. The dewatered gypsum may be commercially used, for example in wall board production.

As alternative to the wet scrubber 10 other devices may be utilized as a first gas cleaning device for removing sulphur dioxide from the carbon dioxide rich flue gas. One such alternative device is a spray dryer absorber, which may be of a type that is per se known from, for example, US 4,755,366, and comprises a spray dryer chamber and a dust particle remover. Inside the spray dryer chamber a lime stone slurry is atomized to react with sulphur dioxide and form a dry rest product which is collected in the bottom of the spray dryer chamber and in the dust particle remover. Further alternatives to the wet scrubber include, for example, a bubbling bed scrubber, an example of which is disclosed in WO 2005/007274, and a moistened dust type of scrubber, an example of which is disclosed in WO 2004/026443.

Returning to Fig. 1, a partly cleaned carbon dioxide rich flue gas leaves the wet scrubber 10 via a duct 44 which forwards the flue gas to a gas distribution point 46. At the gas distribution point 46, being located between the wet scrubber 10 and the flue gas condenser 12, as seen with respect to the direction of the flow of the partly cleaned carbon dioxide rich flue gas, the partly cleaned carbon dioxide rich flue gas is divided into two flows, namely a first flow, which via the duct 22 is recirculated back to the boiler 2, and a second flow, which via a duct 48 is forwarded to the condenser 12. The first flow, which is recirculated back to the boiler 2, typically comprises 50 - 90% by volume of the total flow of the partly cleaned carbon dioxide rich flue gas leaving the wet scrubber 10. The portion of the partly cleaned carbon dioxide rich flue gas being recirculated to the boiler 2 is not forwarded through the condenser 12, making it possible to design the condenser 12 for a smaller gas flow rate. The second flow, typically comprising 10 - 50% by volume of the total flow of the partly cleaned carbon dioxide rich flue gas leaving the wet scrubber 10, is, hence, forwarded, via the duct 48, to the condenser 12. The condenser 12 is provided with a circulation pump 50 which is operative for circulating a cooling liquid, via a circulation pipe 52, in the condenser 12 in a manner which will be described in more detail hereinafter.

The cooling liquid being circulated in the flue gas condenser 12 cools the partly cleaned carbon dioxide rich flue gas to a temperature which is below its saturation temperature, with respect to water vapour, and hence causes a condensation of at least a portion of the water vapour content of the partly cleaned carbon dioxide rich flue gas being forwarded from the wet scrubber 10. The condensed water leaves the condenser 12 via a disposal pipe 54. A portion of the condensed water leaving the condenser 12 via the pipe 54 is forwarded to the wet scrubber 10 via a pipe 56 as make up water. A further portion of the condensed water is forwarded, via a pipe 58, to a water treatment unit 60, in which the condensed water is treated prior to being re-used in the process, for example as boiler water, or being disposed of. The cleaned carbon dioxide rich flue gas leaves the condenser 12 via duct 62 and is forwarded to a gas processing unit 64 in which the cleaned carbon dioxide rich flue gas is compressed for disposal.

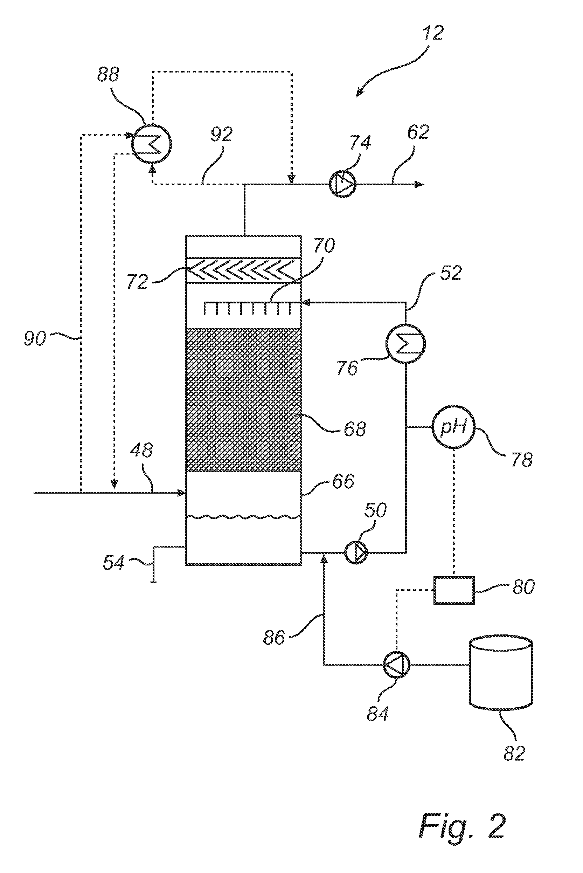

Fig. 2 illustrates the second gas cleaning device in the form of the flue gas condenser 12 in more detail. The condenser 12 comprises a tower 66, which is filled with a packing material 68 for providing good contact between the partly cleaned carbon dioxide rich flue gas coming from the first gas cleaning device, i.e., from the wet scrubber 10, and the cooling liquid circulated in the condenser 12 by means of the pump 50 in the pipe 52. The packing material 68 could be of the so-called structured packing type, of which Mellapak Plus, which is available from Sulzer Chemtech USA Inc, Tulsa, USA, is one example, or a so-called random packing type, of which Jaeger Tri-Pack, which is available from Jaeger Products, Inc, Houston, USA, is one example. A liquid distributor 70 is operative for distributing the cooling liquid over the packing material. In this case, the cooling liquid comprises mainly water, which is brought into direct contact with the flue gas. The liquid distributor 70, which may be, for example, Jaeger Model LD3 or Model LD4, which are available from Jaeger Products, Inc, Houston, USA, distributes the liquid evenly over the packing material 68 without causing an undue formation of small liquid droplets.

The partly cleaned carbon dioxide rich flue gas is supplied, via the duct 48, to the lower end of the tower 66 and moves vertically upwards through the tower 66, being brought into direct contact, in a counter-current flow manner, with the cooling liquid flowing down through the packing material 68. At the upper end of the tower 66 a mist eliminator 72 is arranged. The mist eliminator 72 is operative for removing liquid droplets from the flue gas. The cleaned carbon dioxide rich flue gas then leaves the condenser 12 via the duct 62. A fan 74 is operative for forwarding the cleaned carbon dioxide rich flue gas to the gas processing unit 64 illustrated hereinbefore with reference to Fig. 1.

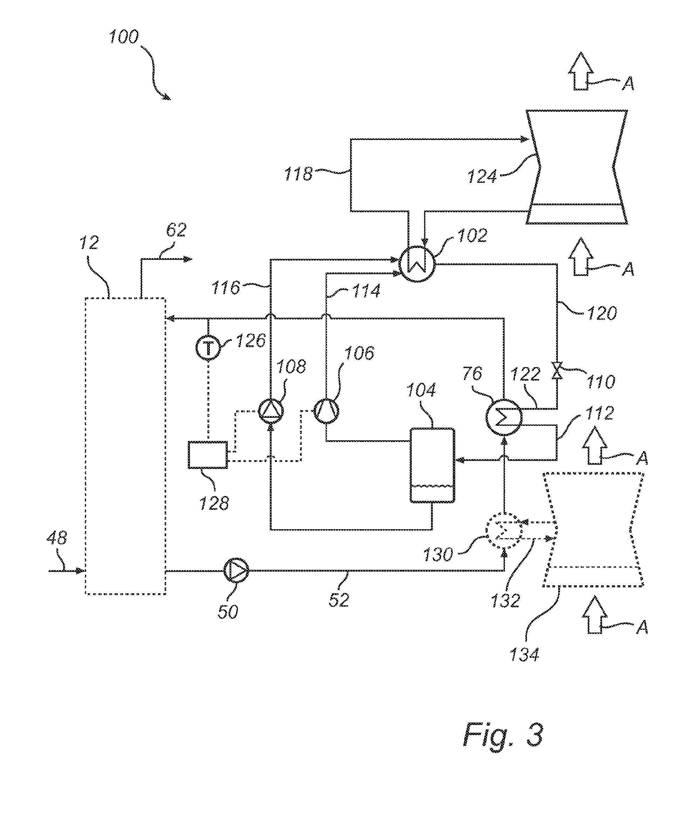

A first heat exchanger 76 is arranged in the pipe 52, as illustrated in Fig. 2. The first heat exchanger 76 is operative for cooling the cooling liquid being transported in the pipe 52. The first heat exchanger 76 forms part of a heat pump, as will be described in more detail hereinafter, with reference to Fig. 3.

Returning to Fig. 2, a pH-sensor 78 is operative for measuring the pH of the cooling liquid being forwarded in the pipe 52. A control unit 80 is operative for receiving a signal from the pH-sensor 78. The control unit 80 is operative for controlling the supply of an alkaline substance from an alkaline substance storage 82. Hence, the control unit 80 is operative for comparing the pH as measured by means of the pH sensor 78 to a pH set point. When the pH measured by the pH sensor 78 is below the pH set point the control unit 80 sends a signal to an alkali supply device in the form of a pump 84 to the effect that alkaline substance is to be pumped from the storage 82 via a pipe 86 to the pipe 52 in order to increase the pH of the cooling liquid. The pH of the liquid of the pipe 52 is typically controlled to be in the range of pH 4.5 - 6.0 to achieve an efficient removal of acid pollutant gases, including sulphur dioxide, without removing also carbon dioxide. The alkaline substance which is stored in the storage 82 and which is utilized for controlling the pH of the cooling liquid circulating in the condenser 12 preferably has a high solubility in water, preferably a solubility in water at a temperature of 20°C of at least 50 g/litre, more preferably a solubility of at least 100 g/litre at 20°C. Examples of suitable alkaline substances include sodium hydroxide (NaOH), potassium hydroxide (KOH), sodium carbonate (Na₂CO₃), and sodium bicarbonate (NaHCO₃). Often the most preferred alkaline substance is sodium hydroxide (NaOH). A highly soluble alkaline substance has the advantage of reducing the risk of incrusts being formed when the temperature of the cooling liquid is decreased in the first heat exchanger 76, as will be described in more detail hereinafter. The cooling liquid being circulated by means of the pump 50 in the condenser 12 is preferably a clear liquid, meaning that only small amounts of solids are contained in the circulating liquid. Preferably, the amount of solids in the cooling liquid circulating in the condenser 12 is less than 10 gram / litre, preferably less than 5 gram / litre. In comparison, the slurry circulating in the wet scrubber 10, disclosed hereinbefore with reference to Fig. 1, may typically contain 150-300 gram /litre of solids. An advantage of having a low concentration of solids in the liquid circulating in the condenser 12 is that re-use and cleaning of the condensate water leaving the condenser 12 via the pipe 54 becomes easier, compared to a condensate water being mixed with a high concentration of solid particles.

Optionally, a gas-gas heat exchanger 88 may be provided. A duct 90, illustrated by a dashed line in Fig. 2, is operative for forwarding at least a portion of the flow of the partly cleaned carbon dioxide rich flue gas from the duct 48 to the heat exchanger 88, and then back again. A duct 92, illustrated by a dashed line in Fig. 2, is operative for forwarding at least a portion of the flow of the cleaned carbon dioxide rich flue gas of the duct 62 to the heat exchanger 88 and then back to the duct 62. The gas-gas heat exchanger 88 is operative for causing a slight reheating of the gas leaving the condenser 12, such reheating reducing the amount of liquid droplets leaving the condenser 12 and being forwarded to the gas processing unit 64, illustrated in Fig. 1.

Fig. 3 illustrates a heat pump 100 being included in the gas cleaning system 8. The heat pump 100 comprises a heat pump evaporator in the form of the first heat exchanger 76, previously described with reference to Fig. 2. The first heat exchanger 76 is operative for cooling the cooling liquid that is circulated in the pipe 52 by means of the pump 50 of the flue gas condenser 12. The heat pump 100 further comprises a heat pump condenser in the form of a second heat exchanger 102. The heat pump 100 is, in the example described with reference to Fig. 3, an ammonia-water heat pump working with a mixture of ammonia and water as cooling media and is, hence, working with a gas-liquid mixture. Hence, the heat pump 100 further comprises a gas-liquid separator 104 which is operative for separating gas from liquid, a compressor 106, which is operative for compressing gas, and a liquid pump 108 which is operative for pumping liquid. Furthermore, the heat pump 100 comprises a throttle valve 110. Heat pumps of this general type are per se known from, for example, US 5,582,020.

A pipe 112 is operative for forwarding the heat pump cooling media comprising a gas/liquid mixture of ammonia and water from the first heat exchanger 76, i.e., the heat pump evaporator, to the gas-liquid separator 104. The gas-liquid separator 104 separates the cooling media into a gas fraction and a liquid fraction. The compressor 106 transports, via a gas pipe 114, the gas fraction from the gas-liquid separator 104 to the second heat exchanger 102, i.e., the heat pump condenser, simultaneously with compressing the gas to a suitable pressure. The liquid pump 108 transports, via a liquid pipe 116, the liquid fraction from the gas-liquid separator 104 to the second heat exchanger 102, simultaneously with raising the pressure of the liquid to a suitable pressure.

In the heat pump condenser, i.e., in the second heat exchanger 102, the cooling media, i.e., the compressed gas and the liquid at elevated pressure, transfers its heat to a heat transfer medium being circulated in a pipe 118. The thereby cooled heat pump cooling media is forwarded, in a pipe 120, to the throttle valve 110 in which the cooling media is expanded, resulting in a reduced pressure. The thereby expanded heat pump cooling media is then forwarded, again, via a pipe 122, to the first heat exchanger 76 to receive more heat.

The heat transfer medium, which may typically be water, is circulated, in the pipe 118, to a heat sink in the form of a cooling tower 124 in which the heat transfer medium is cooled by means of being brought into contact with ambient air, denoted by A in Fig. 3.

A temperature sensor 126 is provided in the pipe 52 downstream of the first heat exchanger 76. The temperature sensor 126 measures the temperature in the cooling liquid just before the cooling liquid is introduced in the condenser 12. A control device 128 is operative for receiving a signal from the temperature sensor 126, the signal indicating the temperature of the cooling liquid. The control device 128 is, furthermore, operative for comparing the temperature as measured by the temperature sensor 126 to a temperature set point. Based on said comparison the control device 128 is operative for controlling the operation of the compressor 106 and the liquid pump 108. Hence, if, for example, the temperature measured by means of the temperature sensor 126 is higher than the temperature set point, then the control device 128 orders the compressor 106 and/or the liquid pump 108 to increase the power put into the gas and liquid, respectively. Thus, for example, the compressor 106 may increase the degree of compressing the gas, and/or the liquid pump 108 may increase the degree of increasing the pressure in the liquid. The effect of such control of the compressor 106 and/or of the liquid pump 108 is that the amount of heat transferred by the heat pump 100 from the cooling liquid in the pipe 52 to the heat transfer medium in the pipe 118 is increased, resulting in a decreased temperature in the cooling liquid being transferred to the condenser 12 via the pipe 52. Hence, the control device 128 may be operative for controlling the heat pump 100 in a manner which controls the amount of heat absorbed from the cooling liquid, and desorbed to the heat sink 124, in such a manner that the cooling liquid being supplied to the condenser 12 via the pipe 52 will have a constant and sufficiently low temperature. The temperature of the cooling liquid being circulated in the pipe 52, as measured by means of the sensor 126, is a parameter which is related to the water vapour concentration of the cleaned carbon dioxide rich flue gas leaving the flue gas condenser 12. Hence, controlling the temperature of the cooling liquid being circulated in the pipe 52 means controlling the temperature and the water vapour concentration of the cleaned carbon dioxide rich flue gas leaving the condenser 12.

The operation of the heat pump 100 will now be described with reference to a non-limiting example. A requirement for the flue gas condenser 12 may typically be that the cleaned carbon dioxide rich flue gas leaving the flue gas condenser 12 via the duct 62, as illustrated in Fig. 2, should have a water vapour concentration of 0.5 - 8% by volume, preferably a water vapour concentration of 0.5 - 3 % by volume. To achieve such a low water vapour concentration, the partly cleaned carbon dioxide rich flue gas is cooled, in the condenser 12, to a temperature below the saturation temperature of the partly cleaned carbon dioxide rich flue gas, causing water to condense inside the condenser 12. The partly cleaned carbon dioxide rich flue gas leaving the wet scrubber 10, illustrated in Fig. 1, may typically have a temperature of 60 - 80°C and a water vapour concentration of 25-55% by volume. In the event the first gas cleaning device is a spray dryer absorber or a moistened dust type of scrubber, as described hereinbefore, the partly cleaned carbon dioxide rich flue gas leaving such a first gas cleaning device may typically have a temperature of 90 - 120°C and a water vapour concentration of 23-54% by volume. The partly cleaned carbon dioxide rich flue gas entering the condenser 12 will thus, typically, have a temperature in the range of 60-120°C, depending on which type of first gas cleaning device that is utilized, and a water vapour concentration of typically 23-55 % by volume. To be able to reduce this high water vapour concentration down to a water vapour concentration of 0,5 - 8% by volume the partly cleaned carbon dioxide rich flue gas must be cooled to a temperature of 3 - 40°C to achieve sufficient condensation of water vapour. To achieve cooling to such low temperatures, the cooling liquid circulating in the flue gas condenser 12 should have, at the inlet to the flue gas condenser 12, a temperature of 0-35°C. To be able to reduce the water vapour concentration to 0,5 - 3 % by volume, the partly cleaned carbon dioxide rich flue gas must be cooled to a temperature of about 3-22 °C, and the cooling liquid circulating in the flue gas condenser 12 should have, at the inlet to the flue gas condenser 12, a temperature of 0-20°C.

In this example the partly cleaned carbon dioxide rich flue gas leaving the wet scrubber 10 has a temperature of 76°C and a water vapour concentration of 40% by volume. This gas enters the condenser 12 via the duct 48 and is cooled to a temperature of 10°C, the water vapour concentration thereby being reduced from 40% by volume down to a water vapour concentration of 1.3% by volume in the cleaned carbon dioxide rich flue gas leaving the condenser 12 via the duct 62. To achieve such cooling, the control device 128 has been set to control the temperature of the cooling liquid entering the condenser 12 via the pipe 52 to a temperature of 7°C. The cooling liquid leaving the condenser 12 would typically, under the above conditions, have a temperature of 40°C. Hence, the control device 128 would need to control the compressor 106 and the pump 108 of the heat pump 100 to cool the cooling liquid being circulated in the pipe 52 from a temperature of 40°C at the inlet to the first heat exchanger 76 and down to a temperature of 7°C at the outlet of the first heat exchanger 76. Such cooling in the first heat exchanger 76 would typically result in that the heat pump condenser, i.e., the second heat exchanger 102, would heat the heat transfer medium circulating in the pipe 118 from for example 15°C at the inlet to the second heat exchanger 102 and up to a temperature of for example 50°C at the outlet from the second heat exchanger 102. Hence, the heat sink in the form of the cooling tower 124 would cool the heat transfer medium circulating in the pipe 118 from about 50°C and down to about 15°C by means of bringing the heat transfer medium into contact with ambient air A having a temperature of, for example, 10°C.

It will be appreciated from the above example that the heat pump 100 utilizes the heat of the cooling liquid leaving the condenser 12 at a temperature of only 40°C to heat the heat transfer medium circulating in the pipe 118 from 15°C to 50°C. Hence, the heat pump 100 absorbs heat at a first temperature from the cooling liquid, and desorbs heat at a second temperature, being higher than the first temperature, to the heat sink in the form of the cooling tower 124. The consequence is that the driving force for cooling in the cooling tower 124 becomes very high, since a heat transfer medium having an initial temperature of 50°C is cooled by ambient air having a temperature of 10°C. This makes cooling in the cooling tower 124 very efficient. Furthermore, the heat pump 100 makes it possible to cool the cooling liquid circulating in the pipe 52 from about 40°C to about 7°C, although the ambient temperature is in fact higher than 7°C.

If the ambient air temperature would increase, as is likely to happen in the summer time, to, e.g., an ambient air temperature of 30°C, the driving force for cooling in the cooling tower 124 would still be rather high. Furthermore, the control device 128 could, on such occasion of an ambient air temperature of 30°C and if needed, automatically order the compressor 106 and/or the pump 108 to increase the compression of the gas, and/or to increase the pressure of the liquid, respectively, such that the heat transfer medium circulating in the pipe 118 is heated up to, e.g., 80°C, thereby increasing further the driving force for the cooling in the cooling tower 124. The heat transfer medium circulating in the pipe 118 would then be cooled from for example 80°C to about 35°C in the cooling tower 124. With the heat pump 100 operating at increased compression of the gas and/or liquid, as indicated above, the heat pump 100 would still, also at an ambient temperature of 30°C, be able to cool the cooling liquid circulating in the pipe 52 from, for example, a temperature of 40°C to, for example, a temperature of 7°C. Hence, the heat pump 100 is operative for providing an improved and controllable driving force for the cooling of the heat transfer medium in the cooling tower 124, and thereby ensures an efficient and controllable cooling of the cooling liquid circulating in the pipe 52, such that the cleaned carbon dioxide rich flue gas leaving the condenser 12 via the duct 62 can be cooled to a desired temperature, e.g. 10°C, regardless of the prevailing ambient conditions.

In accordance with an alternative embodiment, a further heat exchanger 130 could be arranged for cooling the cooling liquid circulating in the pipe 52, as illustrated in Fig. 3. A further heat transfer medium, which may be water, is circulated in a pipe 132 between the heat exchanger 130 and a further cooling tower 134, in which the heat transfer medium is cooled by means of being brought into contact with ambient air, denoted by A. The further heat exchanger 130 is arranged upstream of the first heat exchanger 76, as seen with respect to the direction of the flow of the cooling liquid in the pipe 52, and operates as a pre-cooler, which is operative for cooling the cooling liquid circulating in the pipe 52 from, for example, a temperature of 40°C, to, for example, a temperature of 20°C. Hence, the further cooling tower 134 functions as a further heat sink. The further heat exchanger 130 and the further heat sink 134 are provided for cooling the circulating cooling liquid circulating in the pipe 52 in series with the heat pump 100.The consequence is that the cooling liquid circulating in the pipe 52 will, when reaching the first heat exchanger 76 of the heat pump 100, have a rather low temperature, such as 20°C. Thus, the cooling liquid needs only be cooled slightly, from 20°C, in the heat exchanger 76 to get to the desired temperature of, for example, 7°C. This reduces the load on the heat pump 100, and may even make it possible to temporarily shut off the heat pump 100 during cold periods, such as winter time, when the ambient air temperature may be as low as, for example, -10°C, which may be sufficient for cooling the cooling liquid circulating in the pipe 52 to, for example, 7°C, using the further heat exchanger 130 alone. Hence, the further heat exchanger 130 may decrease the energy consumption and the wear on the heat pump 100. As a further option, the heat transfer medium circulating in the pipe 132 may be directed to the cooling tower 124 of the heat pump 100, thus omitting the need for the further cooling tower 134.

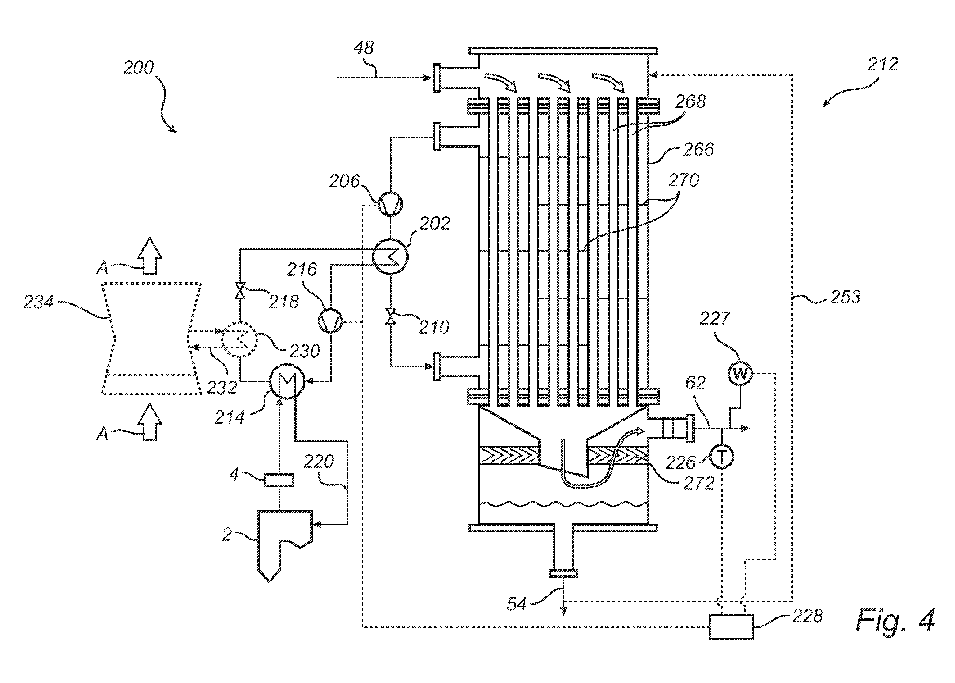

Fig. 4 illustrates, in a schematic manner, an alternative heat pump 200 which is connected to a condenser 212 which is of the tube-cooler type. Details illustrated in Fig. 4 that have the same function as the corresponding details of Fig. 2 have been given the same reference numerals. The condenser 212 has a tower 266. A plurality of tubes 268 are arranged in the tower 266. The partly cleaned carbon dioxide rich flue gas is supplied, via the duct 48, to the upper end of the tower 266 and moves vertically downwards through the tower 266, and at the inside of the tubes 268. The cleaned carbon dioxide rich flue gas leaves the lower end of the tower 266 via the duct 62.

The heat pump 200 illustrated in Fig. 4 is a two-stage heat pump having, in principle, two heat pumps arranged in series with each other. The first stage of the heat pump 200 utilizes the condenser 212 itself as a heat pump evaporator, and hence as first heat exchanger. The first stage of the heat pump 200 further comprises a heat pump condenser in the form of a second heat exchanger 202, a compressor 206, and a throttle valve 210. The second stage of the two-stage heat pump 200 utilizes the second heat exchanger 202 as heat pump evaporator. The second stage of the heat pump 200 further comprises a heat pump condenser in the form of a third heat exchanger 214, a compressor 216, and a throttle valve 218. The third heat exchanger 214 is connected to a pipe 220. The pipe 220 transports spent boiler water, coming from the steam turbine electric power generation system 4, through the third heat exchanger 214 in which the spent boiler water is reheated, before being returned to the boiler 2. Hence, the boiler water acts as a heat transfer medium transferring heat between the condenser 212 and the boiler 2, the boiler 2 itself being the heat sink in this system.

In the heat pump 200 the cooling media of the first stage of the heat pump also functions as the cooling liquid cooling the partly cleaned carbon dioxide rich flue gas in the condenser 212. Hence, the cooling liquid of the flue gas condenser 212 and the cooling media of the first stage of the heat pump 200 is one and the same medium. The compressor 206 of the first stage of the heat pump 200 transports the cooling media of the first stage of the heat pump 200 between the heat pump evaporator, i.e., the flue gas condenser 212, and the heat pump condenser in the form of the second heat exchanger 202. The cooling media, i.e., the cooling liquid, is, inside the tower 266, transported on the outside of the tubes 268. It will be appreciated, though, that the cooling media may, depending on the operating conditions of the first stage of the heat pump 200, exist on the outside of the tubes 268 in the form of vapour, in the form of a mixture of vapour and liquid, or as a liquid only. Hence, the cooling in the condenser 212 is an indirect cooling process, in which the flue gas being forwarded inside the tubes 268 is indirectly cooled by means of being brought into indirect contact with the cooling media, the cooling media being, in a vapour and/or liquid state, brought into contact with the outside of the tubes 268. Baffles 270 are arranged in the tower 266 to improve the contact between the cooling media and the outer surfaces of the tubes 268.

In the second heat exchanger 202 heat is transferred from the first stage of the heat pump 200 to the second stage of the heat pump 200. The compressor 216 of the second stage of the heat pump 200 transports the cooling media of the second stage of the heat pump 200 between the heat pump evaporator, i.e., the second heat exchanger 202, and the heat pump condenser in the form of the third heat exchanger 214. The first and second stages of the heat pump 200 could utilize the same type of cooling media, such as ammonia-water, or two different cooling media.

Due to the fact that the heat pump 200 is a two-stage heat pump, increasing the temperature of the heat absorbed in the condenser 212 in two stages, before desorbing the heat to the heat sink, i.e., the boiler water, it is possible to heat the spent boiler water in the third heat exchanger 214 from a boiler water temperature of, for example, 25°C at the inlet of the third heat exchanger 214 to a boiler water temperature of, for example, 150°C at the outlet of the third heat exchanger 214. Hence, the heat generated in the condenser 212 due to the condensation of water vapour therein is transferred to the boiler 2, thereby improving the energy economy of the boiler system 1.

As alternative to the two-stage heat pump 200 disclosed herein with reference to Fig. 4, it would also be possible to utilize other types and combinations of heat pumps in order to achieve a suitable increase in the temperature of the boiler water. One type of heat pump that could be useful in this respect is the per se known carbon dioxide absorption heat pump, an example of which is illustrated in US 6,374,630.

A temperature sensor 226 is provided in the duct 62 downstream of the condenser 212. The temperature sensor 226 measures the temperature of the cleaned carbon dioxide rich flue gas leaving the condenser 212. A control device 228 is provided for receiving a temperature signal from the temperature sensor 226. The control device 228 is operative for comparing the temperature as measured by the temperature sensor 226 to a temperature set point. Such a temperature set point could, for example, be a gas temperature of 10°C, which corresponds to a water vapour concentration of 1.3 % by volume in the cleaned carbon dioxide rich flue gas leaving the condenser 212. Based on said comparison the control device 228 is operative for controlling the operation of the compressor 206 and/or the compressor 216 of the heat pump 200. Hence, if, for example, the temperature measured by means of the temperature sensor 226 is 12°C, which is higher than the temperature set point, then the control device 228 orders one or both of the compressors 206 and 216 to increase the power put into the gas. The effect of such control of the compressor 206 and/or the compressor 216 is that the amount of heat transferred by the heat pump 200 from the condenser 212 to the heat transfer medium in the pipe 220 is increased, resulting in an increased cooling of the carbon dioxide rich flue gas in the condenser 212. Hence, the control device 228 is operative for controlling the heat pump 200 in such a manner that the cleaned carbon dioxide rich flue gas leaving the condenser 212 via the duct 62 has a constant, and low, water vapour content.

In an alternative embodiment, a water vapour concentration sensor 227 could be provided, the control device 228 controlling the operation of the heat pump 200 based on a comparison of a measured water vapour concentration as measured by the sensor 227, and a water vapour concentration set point, which could, as example, be 1.3% by volume of water vapour.

As a result of the cooling of the partly cleaned carbon dioxide rich flue gas a condensation of a portion of the water vapour content of the flue gas will occur in the tower 266. The liquid water condensate formed through such condensation will flow downwards through the tubes 268 and end up in the lower portion of the tower 266. The condensate leaves the tower 266 via the pipe 54 transporting the condensate to, for example, the wet scrubber 10 as make up water, and to disposal, as described hereinbefore with reference to Fig. 1. The condensation of the water inside the tubes 268 will result in the formation of a water mist which will capture at least a portion of the sulphur dioxide content of the partly cleaned carbon dioxide rich flue gas. Furthermore, aerosol particles may grow as an effect of such condensation. Hence, the liquid condensate leaving the tower 266 via the pipe 54 will contain some captured sulphur dioxide, and some captured aerosol. Optionally, some of the liquid water condensate may be recirculated to pass through the tubes 268 once more. Such recirculation could be achieved by means of a pipe 253, illustrated with a dotted line in Fig. 4, and a not shown pump. A pH-control device of the type illustrated in Fig. 2 could also be utilized to control the pH-value of the recirculated condensate to a pH of 4-6.5. The purpose of such recirculation would be to increase the removal of pollutants, such as sulphur dioxide, by bringing the flue gas flowing through the tubes 268 into direct contact with an increased amount of liquid. A mist eliminator 272 is arranged in the lower portion of the tower 266 for the purpose of removing condensate droplets from the cleaned carbon dioxide rich flue gas before the cleaned carbon dioxide rich flue gas is allowed to leave the tower 266 via the duct 62.

In accordance with an alternative embodiment, the heat pump 200 could be operative for desorbing heat to a first heat sink, being, for example, the boiler 2, and to a second heat sink 234, being separate from said first heat sink 2. To this end, a further heat exchanger 230 could be arranged for cooling the cooling media of the second stage of the heat pump 200, as illustrated in Fig. 4. A further heat transfer medium, which may be water, is circulated in a pipe 232 between the heat exchanger 230 and the second heat sink, having the form of a cooling tower 234, in which the heat transfer medium is cooled by means of being brought into contact with ambient air, denoted by A. The further heat exchanger 230 is arranged downstream of the third heat exchanger 214 of the heat pump 200, and upstream of the throttle valve 218, as seen with respect to the direction of the flow of the cooling media in the second stage of the heat pump 200, and operates as an aftercooler, taking care of the heat that cannot be transferred to the boiler 2 in the third heat exchanger 214. Hence, the further heat exchanger 230 and the cooling tower 234 provides for additional cooling of the cooling liquid circulating in the condenser 212.

It will be appreciated that numerous variants of the embodiments described above are possible within the scope of the appended claims.

Hereinbefore it has been described that a parameter which is related to the water vapour concentration of the cleaned carbon dioxide rich flue gas leaving the flue gas condenser may be the temperature of the cooling liquid entering the flue gas condenser, as measured by means of the temperature sensor 126 illustrated in Fig. 3, the temperature of the cleaned carbon dioxide rich flue gas leaving the flue gas condenser 212 as measured by means of the temperature sensor 226 illustrated with reference to Fig. 4, or the actual water vapour concentration of the cleaned carbon dioxide rich flue gas leaving the flue gas condenser 212 as measured by means of the water vapour concentration sensor 227 illustrated with reference to Fig. 4. There are also other parameters that could be utilized for measuring, directly or indirectly, the concentration of water vapour in the cleaned carbon dioxide rich flue gas leaving the flue gas condenser. For example, it would be possible to measure the temperature in the cooling media circulating in the heat pump 100, 200, the air temperature difference over the cooling tower, the amount of condensate water leaving the flue gas condenser 12, 212 per unit of time, etc. Hence, the water vapour concentration of the cleaned carbon dioxide rich flue gas leaving the flue gas condenser can be measured directly and indirectly in various ways.

Hereinbefore it has been described that the control device 128, 228 controls the operation of the heat pump 100, 200 by means of controlling the operation of the compressor 106 and the pump 108, and the compressors 206, 216, respectively. It would be possible for the control device 128, 228 to control only one of the cooling media transporting devices. Hence, the control device 128 could control the compressor 106 and/or the pump 108, and the control device 228 could control the compressor 206 and/or the compressor 226. Furthermore, the control device 128, 228 could control the heat pump 100, 200, respectively, in other ways, for example by controlling the operation of the respective heat sink. For example, the control device 128 could control the operation of the cooling tower 124. Hence, when the need for cooling in the flue gas condenser 12 increases, the control device 128 could order a fan, not illustrated in Fig. 3 for reasons of clarity, of the cooling tower 124 to increase its speed to increase the cooling of the cooling media of the heat pump 100.

Hereinbefore it has been described with reference to Fig. 3 that the heat sink is a cooling tower. It will be appreciated that other types of heat sinks may also be utilized, including district heating systems, lakes and seas in which the heat transfer medium is circulated, etc.

Hereinbefore it has been described with reference to Fig. 4 that the heat sink is the boiler water of the boiler 2. It will be appreciated that the heat generated in the flue gas condenser 212, and in the flue gas condenser 12, may be utilized in other parts of the process as well. For example, the heat generated by means of the condenser 12 or 212, and transformed to a higher temperature level by means of the heat pump 100 or 200, may be utilized for heating the oxygen gas generated in the oxygen gas source 18 before introducing such gas in the boiler 2. Furthermore, the heat generated in the condenser 12 or 212 may also be utilized for heating the recirculated partly cleaned carbon dioxide rich flue gas, leaving the wet scrubber 10 and being transported to the boiler 2 via the duct 22, as illustrated hereinbefore with reference to Fig. 1, before such recirculated gas is introduced in the boiler 2. A still further possibility is to utilize the heat generated in the condenser 12, 212, and transformed to a higher temperature level by means of the heat pump 100, 200, when reheating various vent gases from the gas processing unit 64, or the air separation plant 18, before releasing such vent gases to the atmosphere.

Hereinbefore it has been described that the heat sink for the heat pump 100 is a cooling tower 124, and that the heat sink for the heat pump 200 is the boiler 2. It will be appreciated that one heat pump could be provided with several heat sinks, both heat sinks of the same type and heat sinks of different types. An example of the latter is described with reference to Fig. 4, in which the heat pump 200 desorbs heat both to a boiler 2 and to a cooling tower 234. Other combinations of heat sinks are also possible. It would, for example, be possible to provide a heat pump which utilizes a district heating system as a first heat sink, and a cooling tower as a second heat sink.

Hereinbefore it has been described that the second gas cleaning device is a condenser 12 having a packing 68, in which the partly cleaned carbon dioxide rich flue gas is brought into direct contact with a cooling liquid, or a condenser 212 having tubes 268, in which the partly cleaned carbon dioxide rich flue gas is indirectly cooled by means of the cooling liquid. It will be appreciated that other types of condensers may also be utilized, including open spray towers in which the cooling liquid is atomized by means of atomizing nozzles, and is subsequently brought into direct contact with the partly cleaned carbon dioxide rich flue gas.

To summarize, a gas cleaning system 8 is operative for removing water vapour from a carbon dioxide rich flue gas generated in a boiler 2 combusting a fuel in the presence of a gas containing oxygen gas. The gas cleaning system 8 comprises a flue gas condenser 12 being operative for condensing water from at least a portion of the carbon dioxide rich flue gas generated in the boiler 2 by bringing the carbon dioxide rich flue gas into contact with a circulating cooling liquid, thereby generating a cleaned carbon dioxide rich flue gas having a lower concentration of water vapour than the carbon dioxide rich flue gas leaving the boiler. The gas cleaning system 8 comprises a heat pump 100 being operative for absorbing heat at a first temperature from the cooling liquid, and for desorbing heat at a second temperature, being higher than the first temperature, to a heat sink 124.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A method of removing water vapour from a carbon dioxide rich flue gas generated in a boiler (2) combusting a fuel in the presence of a gas containing oxygen gas, **characterised in**
forwarding at least a portion of the carbon dioxide rich flue gas generated in the boiler (2) to a flue gas condenser (12; 212) ;
cooling, in said flue gas condenser (12; 212), the carbon dioxide rich flue gas by bringing the carbon dioxide rich flue gas into contact with a circulating cooling liquid to condense water from the carbon dioxide rich flue gas, thereby generating a cleaned carbon dioxide rich flue gas having a lower concentration of water vapour than the carbon dioxide rich flue gas leaving the boiler (2), and
utilizing a heat pump (100; 200) for absorbing heat at a first temperature from the cooling liquid, and for desorbing heat at a second temperature, being higher than the first temperature, to a heat sink (2; 124).

2. A method according to claim 1, wherein a parameter which is related to the water vapour concentration of the cleaned carbon dioxide rich flue gas leaving the flue gas condenser (12; 212) is measured, and is compared to a set point for that parameter.

3. A method according to claim 2, wherein the operation of the heat pump (100; 200) is controlled based on a comparison between a measured value of the parameter which is related to the water vapour concentration of the cleaned carbon dioxide rich flue gas leaving the flue gas condenser (12; 212) and the set point for that parameter.

4. A method according to any one of the preceding claims, wherein the carbon dioxide rich flue gas is brought into direct contact with the cooling liquid in the flue gas condenser (12).

5. A method according to any one of claims 1-3, wherein the carbon dioxide rich flue gas is indirectly cooled in the flue gas condenser (212) by means of a cooling liquid.

6. A method according to claim 5, wherein the cooling liquid cooling the carbon dioxide rich flue gas indirectly in the flue gas condenser (212) is also utilized as a cooling media of said heat pump (200).

7. A method according to any one of the preceding claims, wherein the cooling liquid is supplied to the flue gas condenser (12; 212) at a temperature of 0-35°C, preferably at a temperature of 0-20°C.

8. A gas cleaning system being operative for removing water vapour from a carbon dioxide rich flue gas generated in a boiler (2) combusting a fuel in the presence of a gas containing oxygen gas, **characterised in** the gas cleaning system (8) comprising a flue gas condenser (12; 212) being operative for condensing water from at least a portion of the carbon dioxide rich flue gas generated in the boiler (2) by bringing the carbon dioxide rich flue gas into contact with a circulating cooling liquid, thereby generating a cleaned carbon dioxide rich flue gas having a lower concentration of water vapour than the carbon dioxide rich flue gas leaving the boiler (2), the gas cleaning system (8) further comprising a heat pump (100; 200) being operative for absorbing heat at a first temperature from the cooling liquid, and for desorbing heat at a second temperature, being higher than the first temperature, to a heat sink (2; 124).

9. A gas cleaning system according to claim 8, wherein the gas cleaning system (8) further comprises a sensor (126; 226, 227) which is operative for measuring a parameter which is related to the water vapour concentration of the cleaned carbon dioxide rich flue gas leaving the flue gas condenser (12; 212), and a control device (128; 228) which is operative for controlling, in view of a comparison of a measured value of said parameter and a set point of said parameter, the operation of the heat pump (100; 200).

10. A gas cleaning system according to any one of claims 8-9, wherein said heat sink comprises a cooling tower (124).

11. A gas cleaning system according to any one of claims 8-10, wherein said heat sink comprises the boiler (2).

12. A gas cleaning system according to any one of claims 8-11, wherein a further heat exchanger (130) and a heat sink (134) are provided for cooling the circulating cooling liquid in series with the heat pump (100).

13. A gas cleaning system according to any one of claims 8-12, wherein the heat pump (200) is operative for desorbing heat to a first heat sink (2) and to a second heat sink (234), being separate from said first heat sink (2).

14. A gas cleaning system according to any one of claims 8-13, wherein said heat pump (200) comprises at least two heat pump stages arranged in series.

15. A gas cleaning system according to any one of claims 8-14, wherein said heat pump (100; 200) is a type of heat pump which is selected from the group of heat pumps comprising ammonia-water absorption heat pumps and carbon dioxide heat pumps.

16. A gas cleaning system according to any one of claims 8-15, wherein the flue gas condenser is an indirect cooling condenser (212), the flue gas condenser (212) being operative for functioning as a heat pump evaporator in which a cooling media being circulated in the heat pump (200) is made to evaporate.
